# EUROPEAN PATENT SPECIFICATION

(11) **EP 3 680 987 B1**
(45) Date of publication and mention of the grant of the patent: **11.05.2022**
(21) Application number: 19214724.7
(22) Date of filing: 10.12.2019
(51) Int. Cl.: H01R 13/453, H01R 13/639, B60L 53/16, H01R 13/74

(54) **ELECTRICAL CONNECTOR**
ELEKTRISCHER STECKVERBINDER
CONNECTEUR ÉLECTRIQUE

(30) Priority: 10.01.2019 IT 201900000415
(43) Date of publication of application: 15.07.2020
(73) Proprietor: GEWISS S.p.A., 24069 Cenate Sotto (Bergamo) (IT)
(72) Inventor: DOMENICO, BOSATELLI, 24069 CENATE SOTTO (BERGAMO) (IT)
(74) Representative: Forattini, Amelia

(56) References cited:
- EP-A1- 2 686 915
- EP-B1- 2 686 915
- DE-U1-202010 017 790
- DE-U1-202013 009 038

## Description

The present invention relates to an electrical connector.

More particularly, the present invention relates to a vandal-resistant connector/outlet device for charging electric vehicles.

The outlet according to the invention is compliant with the EN 62196 Type 2 standard for power levels up to 22 kW (32A 480V) and ensures an IP XXD rating and an IP55 seal (when the plug is inserted).

As is known, batteries of electric vehicles are charged by connection to adapted fixed outlets connected to the electric grid.

Currently commercially available Type 2 connectors are used in outlets (so-called "wall boxes") in order to charge vehicles in private and public spaces, typically in a garage, and in charging stations of private, commercial and public parking spaces.

The connectors must comply with the EN 62196 standard, which requires IP XXD protection on the "active contact holes" (phases and neutral), provided by means of systems for exclusion from the electrical grid or by means of so-called shutters.

The EN 62196 standard also provides that the plug must be locked in the outlet, if it is live.

For this purpose, currently commercially available outlets have various and separate mechanisms for performing the various protection and safety functions.

One problem is constituted by protection from vandalism.

For this purpose, Type 2 outlets are known that are provided with vandal-resistant shutters which are operated by means of an actuator which can be unlocked following user authentication; after authentication, it is possible to insert the plug, thereby activating mechanisms that unlock the female contacts from the shutters.

A system for lighting the plug insertion region may also be activated upon authentication.

Also the EN 62196-1 and EN 62196-2 standards provide for the locking of the plug in the outlet if the outlet is live.

EP2686915A1 discloses a plug-in device system comprising a closure unit by which the access to the socket is blocked. The closure unit has a rotary ring, which via coupling means, is coupled to a panels such that the rotation of the ring effects a movement of the panels from a closed position in an open position. Additional locking means block the mobility of the rotary ring and/or panels in the closed position as long as no pressure is applied to the panels; securing means prevent the panels from opening when a direct force is applied.

DE202010017790U1 discloses a device for securing a charging socket for electric vehicles, comprising a cover plate which can be fastened to the housing of the socket and which has a passage opening for a plug, wherein on the cover plate their outlet side facing a protective flap is pivotally mounted, by means of which the passage opening is closable and which is fixable via a locking mechanism which is designed such that upon passage of the passage opening of the corresponding plug an unlocking of the protective flap is effected and wherein the protective flap is designed such that by the passage of the plug pivoting of the protective flap is effected.

DE202013009038U1 discloses an electrical plug system having first and second parts and a closure device for controlling access. The closure device has a sliding panel with a passage opening into which the second part can engage, and the sliding panel can be moved transverse to the plugging direction between a closure position and an opening position. A locking means blocks the possibility of moving the sliding panel to the closure position and which is released by applying pressure to the locking means in the plugging direction. The locking means, as viewed in the closure position and in the plugging position, is arranged behind the sliding panel and extends as far as into the region of the passage opening.

The aim of the present invention is to improve the mechanism that provides the vandal-resistant function of an electrical connector, particularly for charging electric vehicles.

Within the scope of this aim, an object of the invention is to provide a connector that has a single mechanism with a vandal-resistant function and designed to lock the plug in the inserted position during use and to protect the connector when it is not in use, i.e. when the plug is extracted.

A further object of the invention is to provide a connector that allows easy and straightforward insertion of the plug.

A further object of the invention is to provide a connector that has a compact construction and can be used easily in various types of charging facility.

A further object of the present invention is to provide a connector which, by virtue of its particular constructive characteristics, is capable of giving the greatest assurances of reliability and safety in use.

This aim, these objects and others which will become better apparent hereinafter are achieved by an electrical connector comprising a casing provided with a front opening and adapted to receive at the rear a female contacts body in which a plug inserted in the front opening can engage; the female contacts of said female contacts body being protected by a pair of shutters, which prevent access to said female contacts when said shutters are in the closed position; said connector comprising a locking mechanism which controls the opening of the shutters and the locking of the plug when it is inserted in the female contacts body; said electrical connector being characterized in that it comprises a slider acting on a first end of a rocking arm; said rocking arm being pivoted in a fulcrum in said casing and having a second end which acts on a locking frame adapted to lock and unlock the movement of said shutters; said slider also performing the function of locking said plug in the inserted position during vehicle charging; said slider having a free end which is opposite the end that acts on said first end of said rocking arm; said free end being able to engage a seat formed in the body of said plug, preventing its extraction.

Further characteristics and advantages will become better apparent from the description of preferred but not exclusive embodiments of the invention, illustrated by way of non-limiting example in the accompanying drawings, wherein:
Figure 1 is a perspective view of the front part of the electrical connector according to the present invention;
Figure 2 is a partially cutout perspective view of the front part of the connector in the unlocking position of the locking frame;
Figure 3 is a partially cutout perspective view of the front part of the connector in the locking position of the locking frame;
Figure 4 is a front perspective view of the connector, showing the shutters in detail;
Figure 5 is a partially cutout perspective view, showing the connector with the plug inserted;

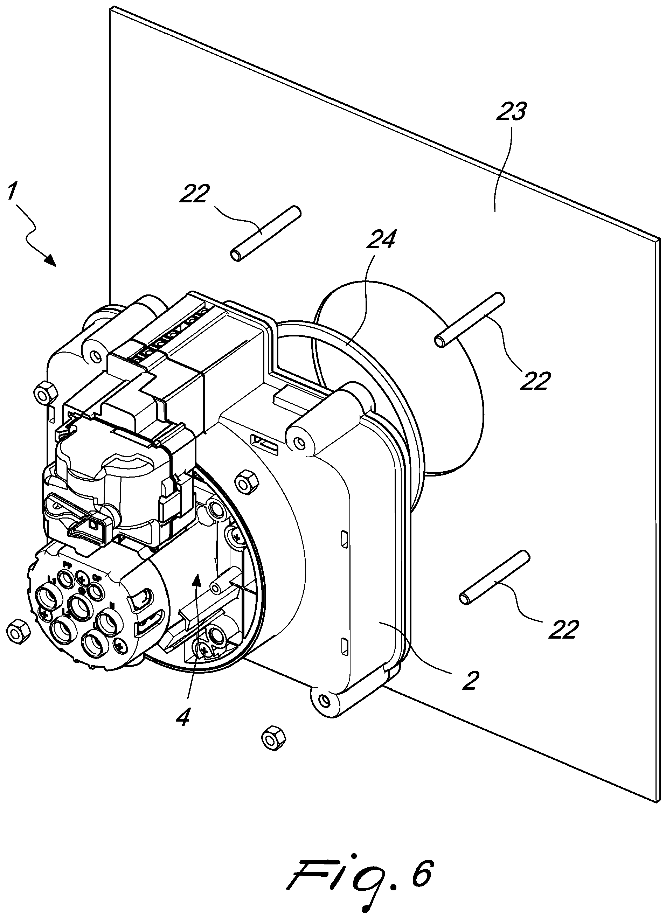

Figure 6 is a perspective view of the rear part of the electrical connector according to the present invention.

With reference to the cited figures, the electrical connector according to the invention, designated generally by the reference numeral 1, includes a casing 2 provided with a front opening 3 and adapted to receive a female contacts body 4, at the rear. A plug 5 can be inserted in the front opening 3 and engaged in the female contacts body 4.

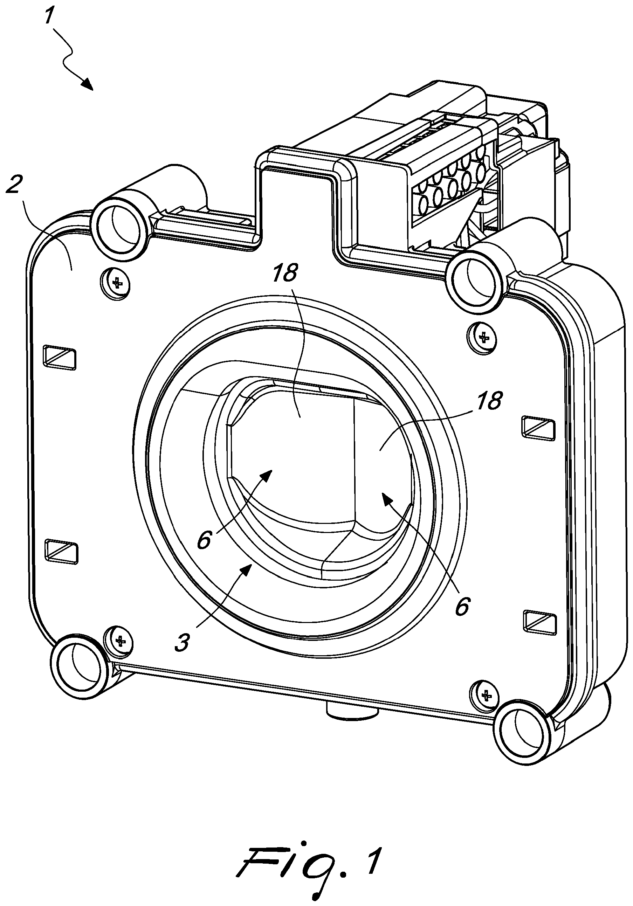

The female contacts of the female contacts body 4 are protected by a pair of shutters 6 that prevent access to the female contacts when the shutters 6 are in the closed position, as shown in Figures 1-4.

According to the present invention, the connector includes a locking mechanism which controls the opening of the shutters and the locking of the plug 5 when it is inserted in the female contacts body 4.

The locking mechanism includes a lever 7, which is actuated by an actuation motor 8 and moves a slider 9, which acts on a first end 11 of a rocking arm 10; the rocking arm 10 is pivoted in a fulcrum 13 in the casing 2 and has a second end 12 which acts on a locking frame 14.

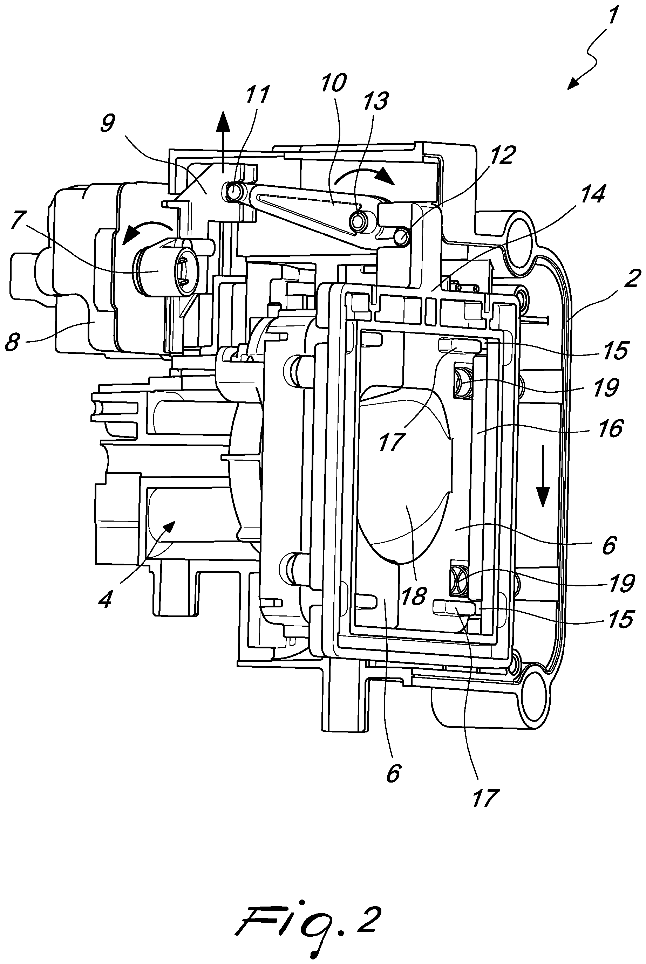

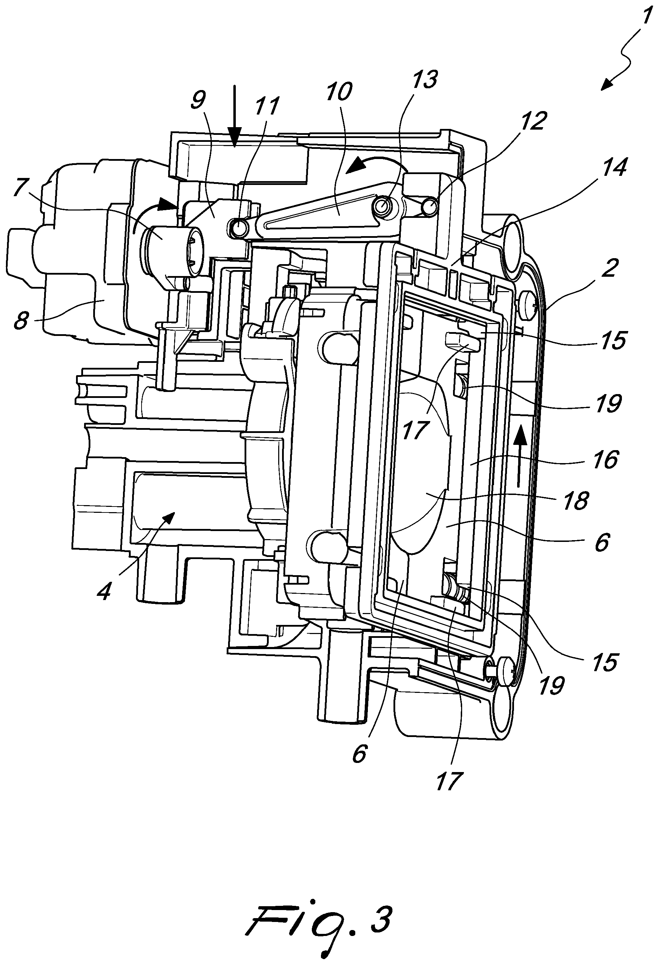

The locking frame 14 can move transversely to the movement direction of the two shutters 6 and prevents or allows their opening, depending on whether it is in the unlocking position, shown in Figure 2, or in the locking position, shown in Figure 3.

For this purpose, the locking frame 14 is provided with side notches 15 which are formed in a side edge 16; in the unlocking position, the side notches 15 allow teeth 17 of the shutters to pass through the shutters and therefore allow the shutters 6 to translate into their open position.

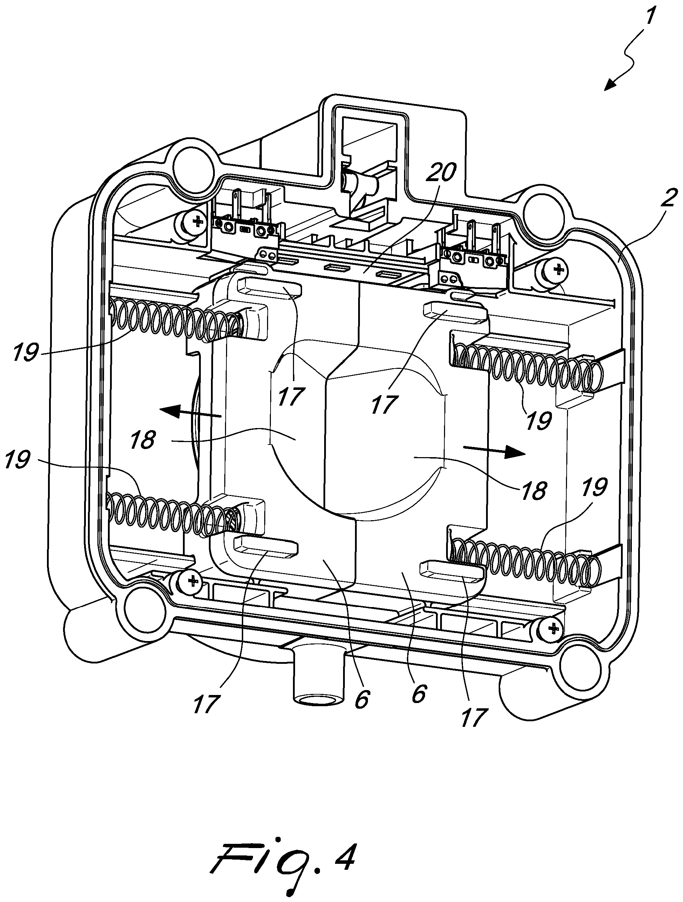

With particular reference to Figure 4, which shows the entry region of the plug 5 without the locking frame 14, both shutters 6 can translate laterally, moved by the plug 5, which, during insertion, acts on inclined planes 18 formed in the shutters 6.

The shutters 6 slide on horizontal guides and, during the extraction of the plug, are returned to the closed position by compression springs 19,

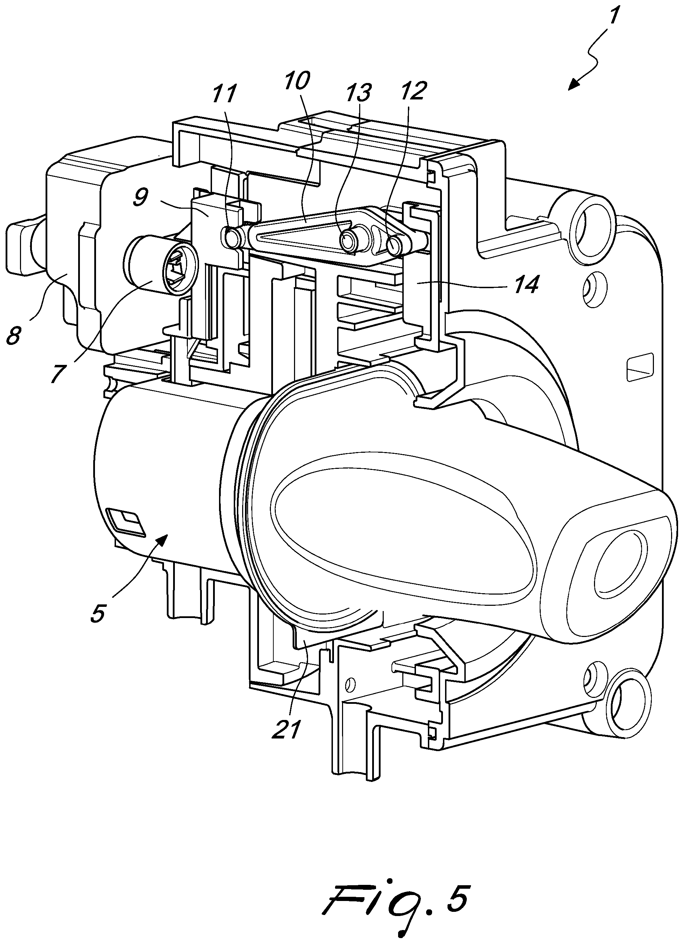

As can be seen in Figure 5, the slider 9 also performs the function of locking the plug in the inserted position during the charging of the vehicle.

The free end of the slider 9, i.e., the one that lies opposite the end that acts on the first end 11 of a rocking arm 10, can in fact engage an adapted seat provided in the body of the plug 5, preventing its extraction.

Advantageously, the shutters 6 are made of transparent material and can diffuse the light emitted by a light source 20 which turns on when the system is activated.

The connector according to the invention also includes a lip-shaped gasket 21, shown in Figure 5, which is molded over the casing 2 and has the function of ensuring the IP rating when the plug is inserted.

The connector 1 is fitted to the electric vehicle charging system with the aid of four threaded stems 22 which are welded inside a wall 23 of the charging system.

The IP seal between the plug and the electric vehicle charging system is ensured by an interposed gasket 24.

In practice it has been found that the invention achieves the intended aim and objects, by providing a connector, particularly for charging electric vehicles, which, by using only the actuator for locking the plug, also performs the vandalism prevention function, allowing, by means of the use of the particular mechanism, the locking of the shutters in the closed position when the plug is not inserted.

The shutters, appropriately lit when the user requests charging, make it easy to identify the plug insertion region.

The connector according to the present invention is compliant with the EN 62196 Type 2 standard, for power ratings up to 22 kW (32A 480 V), and ensures the IP XXD rating, by virtue of the shutters 6, and the IP55 seal, when the plug is inserted, by means of the lip-shaped gasket 21.

The materials used, as well as the dimensions, may of course be any according to the requirements and the state of the art.

## Claims

1. An electrical connector comprising a casing (2) provided with a front opening (3) and adapted to receive at the rear a female contacts body (4) in which a plug (5) inserted in the front opening (3) can engage; the female contacts of said female contacts body (4) being protected by a pair of shutters (6), which prevent access to said female contacts when said shutters (6) are in the closed position; said connector comprising a locking mechanism which controls the opening of the shutters (6) and the locking of the plug (5) when it is inserted in the female contacts body (4); said electrical connector being **characterized in that** it comprises a slider (9) acting on a first end (11) of a rocking arm (10); said rocking arm (10) being pivoted in a fulcrum (13) in said casing (2) and having a second end (12) which acts on a locking frame (14) adapted to lock and unlock the movement of said shutters (6); said slider (9) also performing the function of locking said plug (5) in the inserted position during vehicle charging; said slider (9) having a free end which is opposite to the end that acts on said first end (11) of said rocking arm (10); said free end being able to engage a seat formed in the body of said plug (5), preventing its extraction.

2. The connector according to claim 1, **characterized in that** said locking mechanism comprises a lever (7) actuated by an actuation motor (8); said lever (7) moving said slider (9).

3. The connector according to claim 2, **characterized in that** said locking frame (14) can move transversely with respect to the movement direction of said shutters (6) and prevents or allows their opening, depending on whether it is in the unlocking or locking position.

4. The connector according to claim 3, **characterized in that** said locking frame (14) is provided with side notches (15) formed in a side edge (16); in said unlocking position said side notches (15) allow teeth (17) of said shutters (6) to pass through them, allowing the shutters (6) to translate into the open position.

5. The connector according to claim 4, **characterized in that** said shutters (6) can translate laterally, moved by said plug (5), which, during insertion, acts on inclined planes (18) formed in said shutters (6).

6. The connector according to claim 5, **characterized in that** said shutters (6) slide on horizontal guides and, during extraction of said plug (5), are returned to the closed position by compression springs (19).

7. The connector according to claim 1, **characterized in that** said shutters (6) are made of transparent material and diffuse the light emitted by a light source (20) which turns on when the system is activated.

8. The connector according to claim 1, **characterized in that** it comprises a lip-shaped gasket (21) which is overmolded on said casing (2) at said opening (3).

## Patentansprüche

1. Ein elektrischer Steckverbinder, der ein Gehäuse (2) umfasst, versehen mit einer vorderen Öffnung (3) und ausgebildet, um auf der Rückseite einen Mutter-Kontaktkörper (4) aufzunehmen, in den ein in die vordere Öffnung (3) eingesetzter Stecker (5) eingreifen kann, wobei die Mutterkontakte des Mutter-Kontaktkörpers (4) durch ein paar von Klappen (6) gestützt sind, die den Zugriff auf die Mutterkontakte verhindern, wenn die Klappen (6) in der geschlossenen Position sind, wobei der Steckverbinder einen Blockiermechanismus umfasst, der das Öffnen der Klappen (6) und das Blockieren des Steckers (5) steuert, wenn er in den Mutter-Kontaktkörper (4) eingesetzt ist, wobei der elektrische Steckverbinder **dadurch gekennzeichnet ist, dass** er einen Schieber (9) umfasst, der auf ein erstes Ende (11) eines Kipphebels (10) einwirkt, wobei der Kipphebel (10) drehgelenkig in einem Hebeldrehpunkt (13) in dem Gehäuse (2) gelagert ist und ein zweites Ende (12) hat, das auf einen Blockierrahmen (14) einwirkt, welcher ausgebildet ist, die Bewegung der Klappen (6) zu blockieren und freizusetzen, wobei der Schieber (9) auch die Funktion des Blockierens des Steckers (5) in der eingesetzten Position während des Ladens des Fahrzeugs durchführt, wobei der Schieber (9) ein freies Ende hat, das dem Ende gegenüberliegt, welches auf das erste Ende (11) des Kipphebels (10) einwirkt, wobei das freie Ende in der Lage ist in einen Sitz einzugreifen, der in dem Körper des Steckers (5) geformt ist und so sein Herausziehen verhindert.

2. Der Stecker gemäß Anspruch 1, **dadurch gekennzeichnet, dass** der Blockiermechanismus einen Hebel (7) umfasst, der von einem Antriebsmotor (8) betätigt wird, wobei der Hebel (7) den Schieber (9) bewegt.

3. Der Steckverbindung gemäß Anspruch 2, **dadurch gekennzeichnet, dass** der Blockierrahmen (14) sich quer zu der Bewegungsrichtung der Klappen (6) bewegen kann und ihre Öffnung verhindert oder ermöglicht, je nach dem, ob er sich in der Blockier- oder der Freisetzungsposition befindet.

4. Der Steckverbinder gemäß Anspruch 3, **dadurch gekennzeichnet, dass** der Blockierrahmen (14) mit seitlichen Kerben (15) versehen ist, die in einer Seitenkante (16) geformt sind, in der Freisetzungsposition ermöglichen es die seitlichen Kerben (15), dass Zähne (17) der Klappen (6) durch sie hindurchdringen und es so den Klappen (6) ermöglichen sich in die offene Position zu bewegen.

5. Der Steckverbinder gemäß Anspruch 4, **dadurch gekennzeichnet, dass** die Klappen (6) sich seitlich bewegen können, bewegt von dem Stecker (5) der während des Einsetzens auf schräge Ebenen (18) einwirkt, die in den Klappen (6) geformt sind.

6. Der Steckverbinder gemäß Anspruch 5, **dadurch gekennzeichnet, dass** die Klappen (6) auf horizontalen Führungen gleiten und während des Herausziehens des Steckers (5) durch Druckfedern (19) in die geschlossene Position zurückgestellt werden.

7. Der Steckverbinder gemäß Anspruch 1, **dadurch gekennzeichnet, dass** die Klappen (6) aus transparentem Material bestehen und das Licht zerstreuen das von einer Lichtquelle (20) ausgestrahlt wird, die sich einschaltet, wenn das System aktiviert wird.

8. Der Steckverbinder gemäß Anspruch 1, **dadurch gekennzeichnet, dass** er eine lippenförmige Dichtung (21) umfasst, die an der Öffnung (3) auf das Gehäuse (2) überformt ist.

## Revendications

1. Connecteur électrique comprenant un boîtier (2) doté d'une ouverture avant (3) et adapté pour recevoir à l'arrière un corps de contacts femelles (4) dans lequel une fiche (5) insérée dans l'ouverture avant (3) peut se mettre en prise; les contacts femelles dudit corps de contacts femelles (4) étant protégés par une paire de volets (6) qui empêchent l'accès auxdits contacts femelles lorsque lesdits volets (6) sont dans la position fermée; ledit connecteur comprenant un mécanisme de verrouillage qui contrôle l'ouverture des volets (6) et le verrouillage de la fiche (5) lorsqu'elle est insérée dans le corps de contacts femelles (4); ledit connecteur électrique étant **caractérisé en ce qu'**il comprend un bloc à coulisse (9) agissant sur une première extrémité (11) d'un bras oscillant (10); ledit bras oscillant (10) étant mis en pivotement autour d'un point d'appui (13) dans ledit boîtier (2) et ayant une deuxième extrémité (12) qui agit sur un cadre de verrouillage (14) adapté pour verrouiller et déverrouiller le mouvement desdits volets (6); ledit bloc à coulisse (9) réalisant également la fonction de verrouillage de ladite fiche (5) dans la position insérée pendant un chargement de véhicule; ledit bloc à coulisse (9) ayant une extrémité libre opposée à l'extrémité qui agit sur ladite première extrémité (11) dudit bras oscillant (10); ladite extrémité libre pouvant se mettre en prise avec une embase formée dans le corps de ladite fiche (5) en empêchant son extraction.

2. Connecteur selon la revendication 1, **caractérisé en ce que** ledit mécanisme de verrouillage comprend un levier (7) actionné par un moteur d'actionnement (8); ledit levier (7) faisant bouger ledit bloc à coulisse (9).

3. Connecteur selon la revendication 2, **caractérisé en ce que** ledit cadre de verrouillage (14) peut se déplacer transversalement par rapport à la direction de déplacement desdits volets (6) et empêche ou permet leur ouverture en fonction du fait qu'il est dans la position de déverrouillage ou de verrouillage.

4. Connecteur selon la revendication 3, **caractérisé en ce que** ledit cadre de verrouillage (14) est doté d'entailles latérales (15) formées dans un bord latéral (16); dans ladite position de déverrouillage, lesdites entailles latérales (15) permettent à des dents (17) desdits volets (6) de passer à travers elles en permettant aux volets (6) de passer à la position ouverte.

5. Connecteur selon la revendication 4, **caractérisé en ce que** lesdits volets (6) peuvent se déplacer latéralement, mus par ladite fiche (5) ce qui, pendant l'insertion, agit sur des plans inclinés (18) formés dans lesdits volets (6).

6. Connecteur selon la revendication 5, **caractérisé en ce que** lesdits volets (6) coulissent sur des guides horizontaux et, pendant l'extraction de ladite fiche (5), sont ramenés dans la position fermée grâce à des ressorts de compression (19).

7. Connecteur selon la revendication 1, **caractérisé en ce que** lesdits volets (6) sont constitués d'un matériau transparent et diffusent la lumière émise par une source lumineuse (20) qui s'allume lorsque le système est activé.

8. Connecteur selon la revendication 1, **caractérisé en ce qu'**il comprend une garniture en forme de lèvres (21) surmoulée sur ledit boîtier (2) au niveau de ladite ouverture (3).
